# EUROPEAN PATENT APPLICATION

(11) **EP 1 553 759 A2**
(43) Date of publication of application: **13.07.2005**
(21) Application number: 04106447.8
(22) Date of filing: 09.12.2004
(51) Int. Cl.: H04N 5/247

(54) **Portable combination apparatus with file copy function**

(30) Priority: 06.01.2004 KR 2004000697
(71) Applicant: Samsung Electronics Co., Ltd., Suwon-city, Gyeonggi-do 442-742 (KR)
(72) Inventor: Min, Beoung-uk, Yongin-si Gyeonggi-do (KR); Park, Hong-joon, Seoul (KR)
(74) Representative: Geary, Stuart Lloyd

(57) **Abstract**

Disclosed are a portable combination apparatus capable of copying image files between recording media and a method thereof. The portable combination apparatus includes a first and a second recording medium; a display for displaying a menu screen including a first menu for copying an image file stored in the first recording medium into the second recording medium; an operation unit for enabling a user to select the first menu, on the basis of the displayed menu screen; and a control unit for displaying the menu screen on the display, and if the user selects the first menu through the operation unit, copying the image file stored in the first recording medium into the second recording medium under same file name and file extension.

## Description

The present invention relates to portable combination apparatus comprising a first recording medium, connection means for operatively connecting to a second recording medium, graphical user interface means including selecting means and processing means.

Portable combination apparatuses, combining a number of integrated functions, such as a camcorder function, a digital camera function, an MP3 player function, a voice recorder function, a data storage device function and a web-cam function, are known and are small enough to be conveniently portable. A portable imaging combination apparatus is a combination of advanced digital technologies and an image processing device such as a camcorder.

Portable combination apparatuses are known to use hard disks and memory cards selectively as recording media for storing images.

Sometimes a request is made to copy images stored in the hard disk to the memory card or *vice versa*. Hard disk are advantageous because of their large storage capacity. However, transmitting data from the built-in hard disk to a different external device can be challenging. On the other hand, memory cards have relatively small storage capacity but are easily removable from the device and data can be easily moved from the memory card to an external device.

Therefore, a need exists for copying data from a memory card into a hard disk to overcome the shortage of storage in the memory card. Furthermore, there is a need for copying data from a hard disk into a memory card in order to move data to an external device more easily.

Electronic products have become part of people's daily lives. As their functions are getting more complex, more attention is now paid to how to design the products so that people can easily operate them. Copying data between recording media, for example, will be much easier and more convenient if an interface is provided.

Recently, large capacity hard disks and large capacity memory cards have been developed and commercialized. As a greater number of files can be recorded in those, more sophisticated file management is required. Also, it is important that a user receives help with file management and file search assistance when data is being copied between recording media.

Accordingly, there is a need for a method and apparatus for copying files between large capacity hard disks and relatively smaller capacity memory cards.

A portable combination apparatus, according to the present invention, is characterised by the processing means is responsive to a user input, effected by means of the graphical user interface means, to copy an image file from the first recording medium to a second recording medium, connected to said connection means, or *vice versa*.

Additional preferred and optional features of the present invention are set forth in claims 2 to 20 appended hereto.

Embodiments of the present invention will now be described, by way of example, with reference to the accompanying drawings, in which:
Figure 1A is a perspective view of the front and the right side of a portable combination apparatus according to the present invention;
Figure 1B is a bottom view of the portable combination apparatus shown in Figure 1A;
Figure 1 C is a perspective view of the rear and the left side of the portable combination apparatus shown in Figure 1A;
Figure 2 is a schematic block diagram of the portable combination apparatus shown in Figure 1A;
Figure 3 is a block diagram illustrating elements involved in copying image files between recording media according to the present invention;
Figures 4A to 4D are flowcharts illustrating a method for copying an image file between recording media in accordance with the present invention;
Figures 5A to 5I show user interface screens displayed on an LCD during a procedure copying an image file between recording media according to the present invention; and
Figure 6 illustrates the directory structure of a hard disk drive (HDD) and a memory card in an embodiment of the present invention.

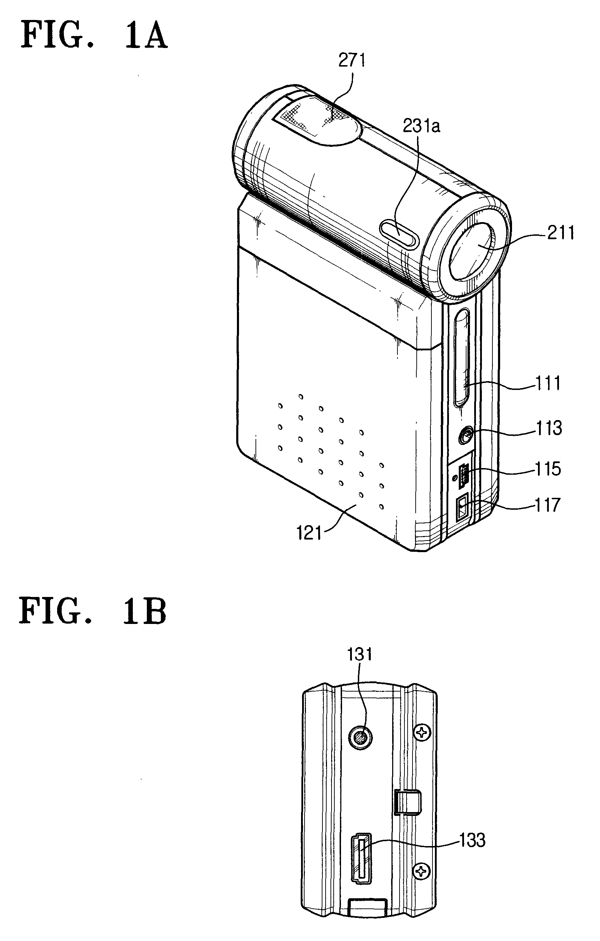

Referring to Figure 1A, on the front side of a portable combination apparatus is a lens 211 for photographing a subject, a remote control signal receiving unit 111 for receiving a remote control signal, an earphone terminal 113 to which an earphone can be connected, a USB terminal 115 for serial communication with a PC or a printer, and a power supply cable connection terminal 117 for receiving external power through a power supply (not shown).

As described above, mainly terminals for use in connection with external devices are located at the front side of the portable combination apparatus. On the right side of the portable combination apparatus is a photo button 231a for use in still photography, and a battery cover 121 with batteries behind. Also, on the top side of the portable combination apparatus is a microphone 271 through which sounds from outside are input.

Referring to Figure 1B , a tripod fixing unit 131 for mounting the apparatus on a tripod, and a cradle connector 133, through which power and digital or analogue image signals are input from a cradle (not shown), are disposed at the bottom of the portable combination apparatus.

The the operation buttons, located on the outside of the portable combination apparatus, will now be explained.

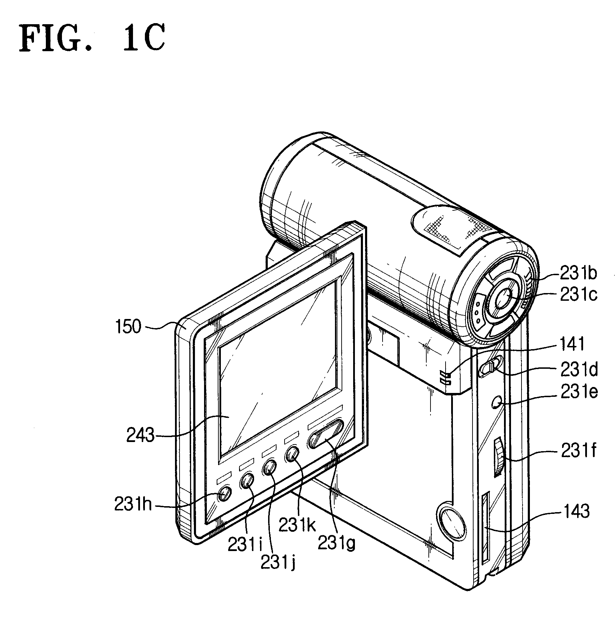

Referring to Figure 1C, for the convenience of users, most of the operation buttons of the portable combination apparatus are laid out on the rear side of the portable combination apparatus or on an LCD panel 150.

As shown in Figure 1 C, the rear side of the portable combination apparatus comprises a zoom switch 231b for zooming the lens 211 in or out, a photographing button 231c for photographing moving images, an operational mode selection switch 231 d for use in selecting an operational mode (such as, store, reproduce or power off mode) of the portable combination apparatus, a menu button 231 for displaying sub-menu screens, which will be described later in more detail, in accordance with the mode selected by a mode button 231g, on an LCD 243 and a menu dial 231f for moving a cursor across menu screens displayed on the LCD 243 to a specific option, and for selecting an option where the cursor is stopped.

Also, a memory card slot 143, where a memory card may be mounted, and indicator lights 141 are located at the rear side of the portable combination apparatus. The indicator lights 141 include a power indicator light and a charge indicator light. The power indicator light lights up when the portable combination apparatus is in a power-on state and the charge indicator light emits orange light when the portable combination apparatus is being charged and blue light when charging is complete.

An LCD panel 150, that is movably connected to the portable combination apparatus, includes an LCD 243, for displaying images that have already been photographed or are currently being reproduced, and a menu screen, a mode button 231g for displaying, on the LCD 243, a sub-menu screen for the currently selected operation mode, a rewind button ( 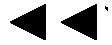 ) 231h, a fast forward button ( 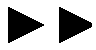 ) 231i, a play/pause button ( 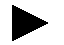 11) 231 j, and a stop button (■) 231k.

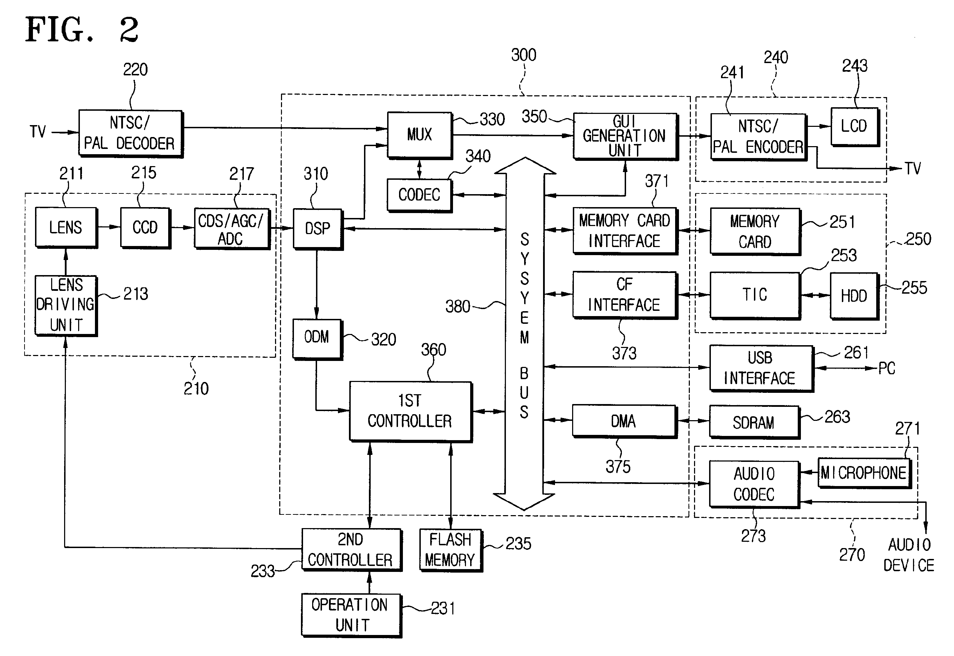

Referring to Figure 2, the portable combination includes a photographing block 210, a National Television System Committee/Phase Alternation Line (NTSC/PAL) decoder 220, an operation unit 231, a second control unit 233, a flash memory 235, a display 240, a storage 250, a Universal Serial Bus (USB) interface 261, a Synchronous Dynamic Random Access Memory (SDRAM) 263, an audio signal processing block 270, and a main control block 300.

The photographing block 210 photoelectrically converts an optical signal, passing through the lens, into an electric signal and executes a designated signal processing procedure on the converted signal. The photographing unit 210, having the above functions, includes a lens 211, a lens driving unit 213, a Charge Coupled Device (CCD) 215, and a Correlated Double Sampler/Auto Gain Controller/Analogue-to-Digital Converter (CDS/AGC/ADC) 217.

The lens driving unit 213 drives the lens 211 under the control of the second control unit 233. More specifically, the lens driving unit 213 zooms in on/zooms out from a subject, automatically adjusts the focus, and adjusts the aperture size of a diaphragm (not shown) of the lens 211.

The CCD 215 converts an optical image passing through the lens 211 into an electric signal and outputs the electric signal. That is, the optical image of a subject is formed on a photosensitive surface of the CCD 215 by the lens 211, and the CCD 215 converts the optical image, formed on the photo sensitive surface, to an electric signal, performs horizontal and vertical scanning on the electric signal and outputs it in the form of an one-dimensional electric signal.

The CDS/AGC/ADC 217 removes noise from the signal output from the CCD 215, using the Correlated Double Sampling circuit, adjusts the gain using the Auto Gain Controlling circuit to keep the signal's level constant, and converts the output signal to a digital signal using the A/D Converter.

The NTSC/PAL decoder 220 coverts an NTSC or PAL signal, input through a video line input terminal (not shown), into a digital signal and transfers it to a main control block 300. NTSC and PAL are TV broadcasting standards. For example, PAL is used in most of Europe and NTSC is used in North America and Korea.

The main control block 300 compresses digital signals, applied from the photographing block 210, the NTSC/PAL decoder 220, and the USB interface 261, to designated compressed format, and stores it in the storage 250. Moreover, the main control block 300 decompresses data from the storage 250 and applies it to the display 240. The main control block 300 stores data, applied from the audio signal processing block 270, in the storage 250 and applies the stored data to the audio signal processing block 270. Besides these functions, the main control block 300 controls the general operations within the apparatus and is usually manufactured as one chip to reduce the size of the end product.

The main control block 300 with the above-described functions includes a Digital Signal Processor (DSP) 310, an Optical Detection Module (ODM) 320, a Multiplexer (MUX) 330, CODEC 340, Graphical User Interface (GUI) generation unit 350, a first controller 360, a memory card interface 371, a Compact Flash (CF) interface 373, a Direct Memory Access (DMA ) 375, and a system bus 380.

The DSP 310 processes digital signals, applied from the photographing block 210, and applies the processed signals to the MUX 330 or the system bus 380. The DSP 310 also converts digital signals, applied from the photographing block 210, into luminance (Y) signal and chrominance (C) signals and applies them to the ODM 320.

Based on the Y and C signals, applied from the DSP 310, the ODM 320 generates ODM data, which is control information, and outputs it to the first controller 360. More specifically, the ODM data preferably includes Auto Exposure (AE) data for optimizing the amount of incident light on the CCD 215, Auto Focus (AF) data for automatically focusing a focus lens, and Auto White Balance (AWB) data for automatically balancing colors according to the color temperature of a light source.

The MUX 330 applies the output signal from the DSP 310 or the output signal from the NTSC/PAL decoder 220 to the CODEC 340 or the GUI generation unit 350.

The CODEC 340 compresses input data into a designated format, and if necessary, decompresses the compressed data again. In particular, if the input data is moving image data, the CODEC 340 compresses it into, preferably, MPEG4 format, while if the input data is still image data, the CODEC 340 compresses it into, preferably, JPEG format. Of course, other compression formats may be used.

The GUI generation unit 350 stores graphic data, such as menus which are required for constructing the GUI environment, and under the control of the first controller 360, it combines a menu screen with the output image from the MUX 330. The menu screen is a graphic screen provided to a user for convenience, allowing the user to select a desired function of the portable combination apparatus.

The first controller 360 is preferably a 32-bit Reduced Instruction Set Computing (RISC) processor for controlling the general operations of the main control block 300. More specifically, the first controller 360 controls the operations of the CODEC 340 and the GUI generation unit 350, and transfers to a second controller 233 AE data and AF data among the ODM data applied from the ODM 320.

Moreover, the first controller 360 can interface with external devices of various kinds through the system bus 380. The system bus 380 is connected to the memory card interface 371 for interfacing with a memory card 251, to the CF interface 373 for interfacing with the HDD 255 through Transition Integrated Circuit (TIC) 253, to USB interface 261 for interfacing with an external device such as a PC or printer, to DMA 375, and to the audio signal processing block 270.

The operation unit 231 is a user interface for receiving from the user operation commands associated with the selection of functions and operational controls of the portable combination apparatus. As illustrated in Figure 1C, the operation unit 231 includes a photo button 231 a, a zoom switch 231b, a photographing button 231 c, an operational mode selection switch 231d, a menu button 231e, a menu dial 231f, and a mode button 231g.

The second controller 233 receives the user-input operation commands, associated with the selection of the functions and operational controls of the portable combination apparatus, from the operation unit 231 and transfers them to the first controller 360. The second controller 233 also controls the lens driving unit 213 on the basis of the AE data and the AF data transferred from the first controller 360.

The flash memory 235 is used to backup important data so that it is preserved even after power and a system program, such as the booting program needed by the first controller 360, are turned off.

The display 240 displays images output from the main control block 300. The display 240 includes an NTSC/PAL encoder 241 and a Liquid Crystal Display (LCD) 243.

The NTSC/PAL encoder 241 converts image signals, output from the main control block 300, into NTSC image signals or PAL image signals for output to an external device, such as TV. The input images signals are transmitted unchanged to the LCD 243.

The LCD 243 is a display device which displays images applied from the NTSC/PAL encoder 241.

The storage 250 stores image data applied from the main control block 300. The storage includes a memory card 251, TIC 253, and HDD 255.

The memory card 251 is a recording medium wherein image data, applied from the main control block 300, is stored and is an example of removable IC memory cards that can be inserted into or removed from the portable combination apparatus.

The Transition IC (TIC) 253 is used for providing a compact flash interface between the CF interface 373 and the HDD 255. That is, data from the HDD 255 interface is converted by the TIC 253 so that it is compatible with the CF interface 373, which is connected to the main control block 300.

The HDD 255 is a recording medium wherein image data, applied from the main control block 300, is stored.

The USB interface 261 interfaces with external devices, such as PCs or printers.

The SDRAM 263 functions as a buffer for storing data required for the operation of the portable combination apparatus.

The audio signal processing block 270 performs the designated signal processing procedure on audio signals input through the microphone 271 and applies the processed audio signals to the main control block 300. The audio signal processing block 270 also performs a designated signal processing procedure on the audio signals applied from the main control block 300 and outputs the processed audio signals to an external audio device. The audio signal processing block 270 with the above functions includes a microphone 271 and audio CODEC 273. Alternatively, the compressed data can be stored in storage 250.

The microphone 271 converts the audio signal input from the outside into an electrical signal.

The audio CODEC 273 converts analogue signals from the microphone 271 or an external audio device into digital signals, compresses them to data in a designated format, and applies the compressed data to the main control block 300. In addition, the audio CODEC 273 expands the compressed data from the main control block 300, converts it to analogue signals, and transfers the analogue signals to the external audio device.

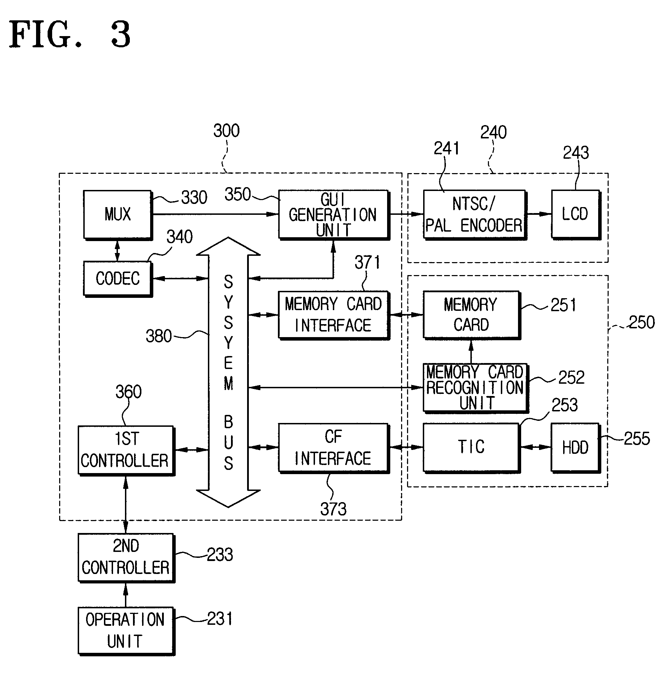

The inter recording medium image file copy function, provided by the portable combination apparatus illustrated in Figure 2, will now be explained with reference to Figures 3 to 6. Figure 3 only illustrates exemplary modules that are actually involved in the image file copy function and includes a memory card recognition unit 252 that is not shown in Figure 2.

Referring to Figure 3, the portable combination apparatus provides to the user a menu screen as a Graphical User Interface (GUI), enabling the user to select a function and to set the GUI environment through the menu screen. In other words, by pressing the mode button 231g, the user calls up a menu screen in the operational mode selected by means of the operational mode selection switch 231d, or by pressing the menu button 231 the user calls up a sub-menu screen under the menu selected by means of the mode button 231g. By vertically rotating the menu dial 231 f, pressing the rewind button 231h, or the fast forward button 231i, the user is able to move the cursor on the menu screen in the vertical direction until it is located at a desired menu. Also, by pressing the menu dial 231f or pressing the play/pause button 231 j, the user is able to select the menu where the cursor is located or execute the function of the menu where the cursor is located.

The operation command of the user at this time is transmitted to the first controller 360 through the second controller 233. Then the first controller 360, in response to the operation command being transmitted, controls the GUI generation unit 350 through the system bus 380. The GUI generation unit 350, under the control of the first controller 360, combines a corresponding menu screen with an image that is applied from the MUX 330, and applies it to the NTSC/PAL encoder 241. The NTSC/PAL encoder 241 outputs the menu screen signal with a combined image to the LCD 243 for display.

For convenience, the above-described procedure, that is, how the operation command of the user is transmitted to the first controller 360 and how the GUI generation unit 350 combines the menu screen with the image under the control of the first controller 360 and how the the menu screen with a combined image is displayed on the LCD 243, will not be described again later. It is sufficient to state that a corresponding menu screen is displayed on the LCD 243 according to the operation command the user inputs through the operation unit 231,.

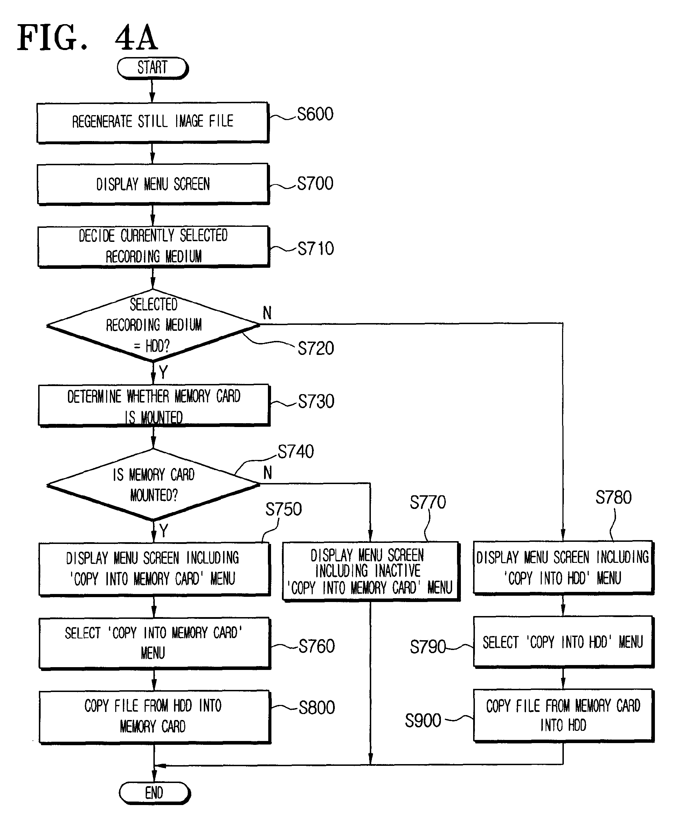

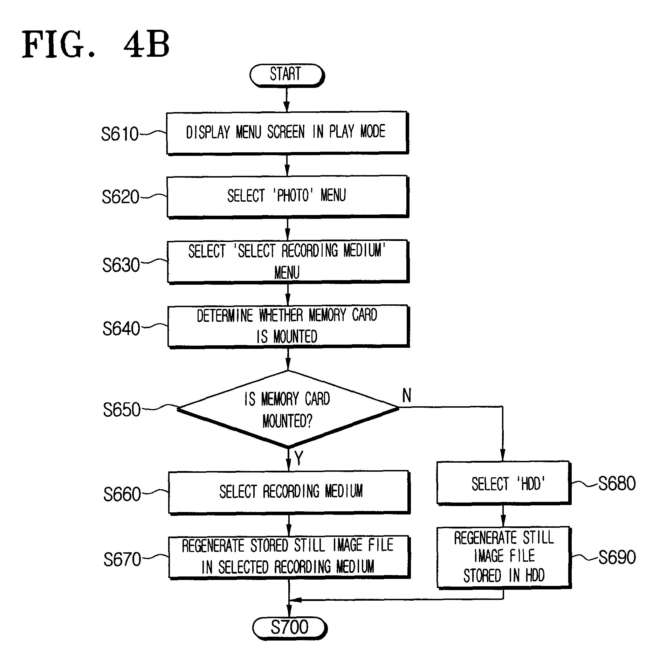

Referring to Figure 4A, the portable combination apparatus is capable of regenerating a still image file stored in the memory card 251 or the HDD 255 at the user's choice (S600). More details on this regeneration procedure (S600) shown in Figure 4B.

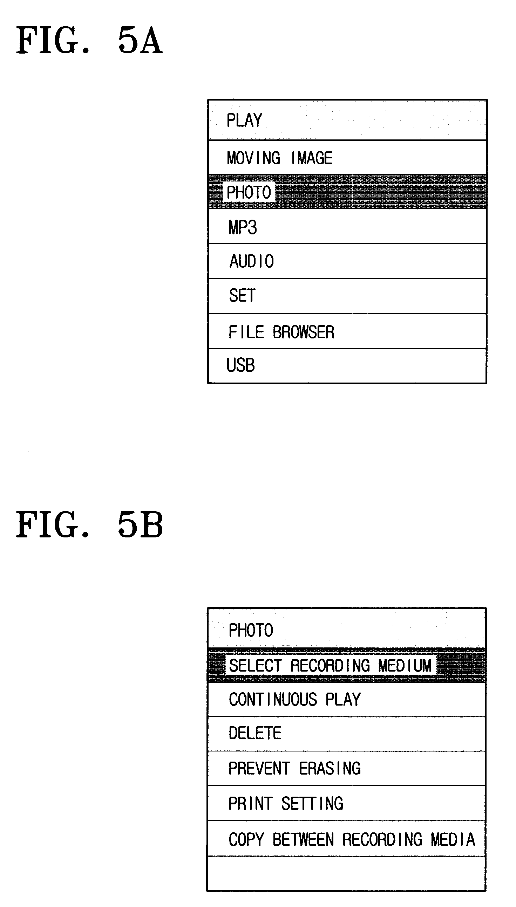

Referring to Figure 4B, when the user moves the operational mode selection switch 231d to the 'play' mode and presses the mode button 231g, a menu screen in 'play' mode is displayed on the LCD 243 (S610). The menu screen in 'play' mode is illustrated in Figure 5A.

Then if the user selects a 'photo' menu item for regenerating a still image file stored in the storage 250, the 'photo' menu screen is displayed (S620). The 'photo' menu screen is illustrated in Figure 5B. Although entering the 'photo' menu by pressing the mode button 231g is illustrated here, the user can call the sub-menu (shown in Figure 5B), i.e. the photo menu, by pressing the menu button 231e. If the user selects the 'Select recording medium' item in the sub-menu of the photo menu (S630), the memory card recognition unit 252, under the control of the first controller 260, detects whether a memory card 251 is mounted, and forwards the detection result to the first controller 260 (S640).

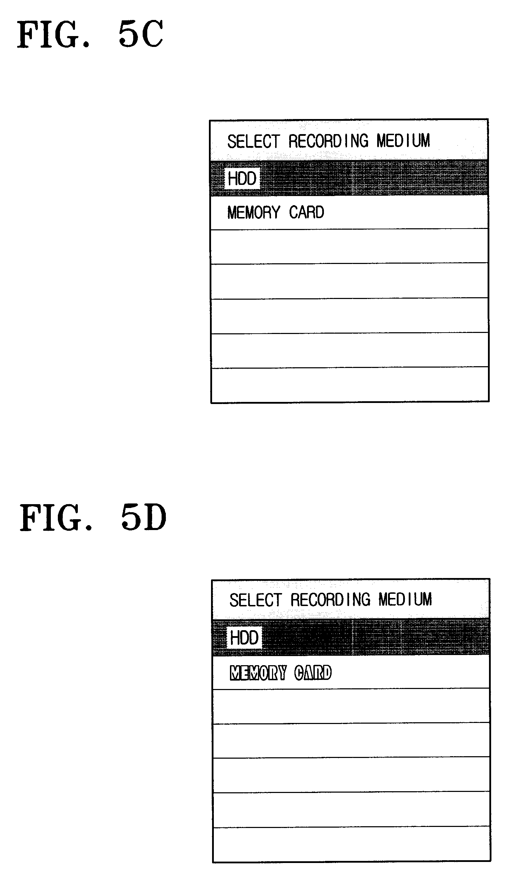

If a memory card 251 is mounted (S650), the first controller 360 controls the GUI generation unit 350 to have the 'Select recording medium' menu screen consisting of 'HDD' menu and 'Memory card' menu items displayed on the LCD 243. Thus the user is given an option to choose the 'HDD' menu item or the 'Memory card' menu item (S660). The 'Select recording medium' menu screen displayed on the LCD 243 is illustrated in Figure 5C.

Then the LCD 243 displays the still image file stored in the recording medium selected by the user (S670). More specifically, if the user selects the 'HDD' menu in step 660, the first controller 360 applies a compressed JPEG still image file stored in the HDD 255 to the CODEC 340 through the TIC 253, the CF interface 373 and the system bus 380 to decompress it. Thus, the decompressed still image file is applied to the NTSC/PAL encoder 241 through the MUX 330 and the GUI generation unit 350, and the NTSC/PAL encoder 241 outputs the still image file on the LCD 243.

Likewise, if the user selects the 'Memory card' menu item in step 660, the first controller 360 applies a compressed JPEG still image file, stored in the memory card, to the CODEC 340 through the memory card interface 371 and the system bus 380 to expand it. The expanded still image file is applied to the NTSC/PAL encoder 241 through the MUX 330 and the GUI generation unit 350, and the NTSC/PAL encoder 241 outputs the still image file for display on the LCD 243.

However, if it turns out that a memory card 251 is not mounted (S650), the first controller 360 controls the GUI generation unit 350 to display a 'Select recording medium' menu screen consisting of a 'HDD' menu item and an inactive 'Memory card' menu item displayed on the LCD 243. Since the 'Memory card' menu item is inactive, the user can select the 'HDD' menu item only (S680). The 'Select recording medium' menu screen on the LCD 243 in this case is illustrated in Figure 5D. If desired, the 'Memory card' menu item can be eliminated, with only the 'HDD' menu item being included in the 'Select recording medium' menu screen.

Afterwards, the compressed JPEG still image file, stored in the HDD 255, is expanded and displayed on the LCD 243 (S690).

Referring again to Figure 4A, the following will describe in detail the rest of the procedure after step 600.

With the still image file, stored in the storage 250, being regenerated, if the user inputs a menu screen display command by pressing the menu button 231d (S700), the first controller 360 decides or identifies the kind of recording media previously selected in either step S660 or step S680 by the user (S710). In other words, the first controller 360 decides in which recording medium, the memory card 251 or the HDD 255, the still image file currently being regenerated was stored.

In step S720, it is determined whether the selected recording medium is the HDD 255. If the HDD 255 is the recording medium selected by the user in step S710 , the memory card recognition unit 252 under the control of the first controller 360 detects whether the memory card 251 is mounted and forwards the detection result to the first controller 260 (S730).

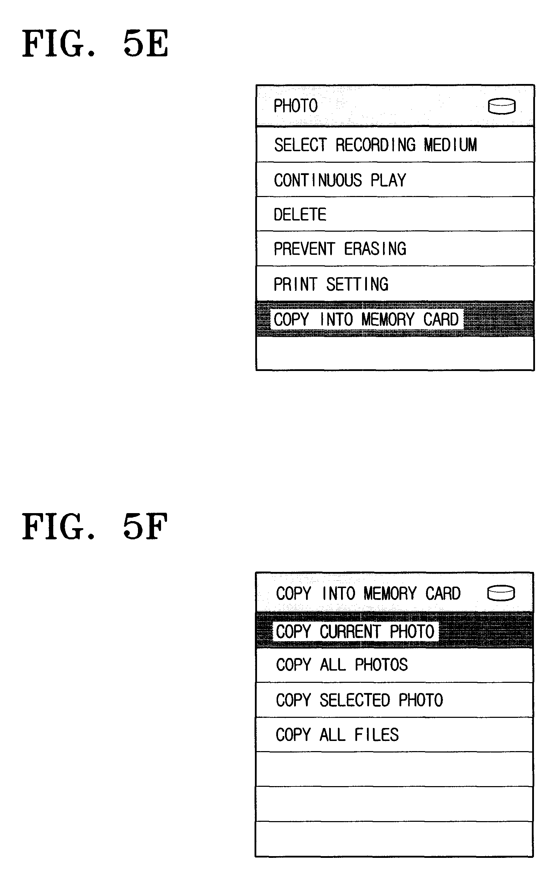

In step S740, it is determined whether the memory card is mounted. If it is determined that the memory card 251 is mounted, the first controller 360 controls the GUI generation unit 350 to have the menu screen including a 'Copy into memory card' menu item displayed on the LCD 243 (S750). The menu screen displayed on the LCD in this case is illustrated in Figure 5E.

On the upper right side of the menu screen in Figure 5E is a cylindrical shaped icon, indicating that the currently selected recording medium is the HDD 255. Therefore, looking at the cylindrical shaped icon on the menu screen and the 'Copy into memory card' menu, the user can easily see which recording medium is currently selected and into which recording medium the image file can be copied.

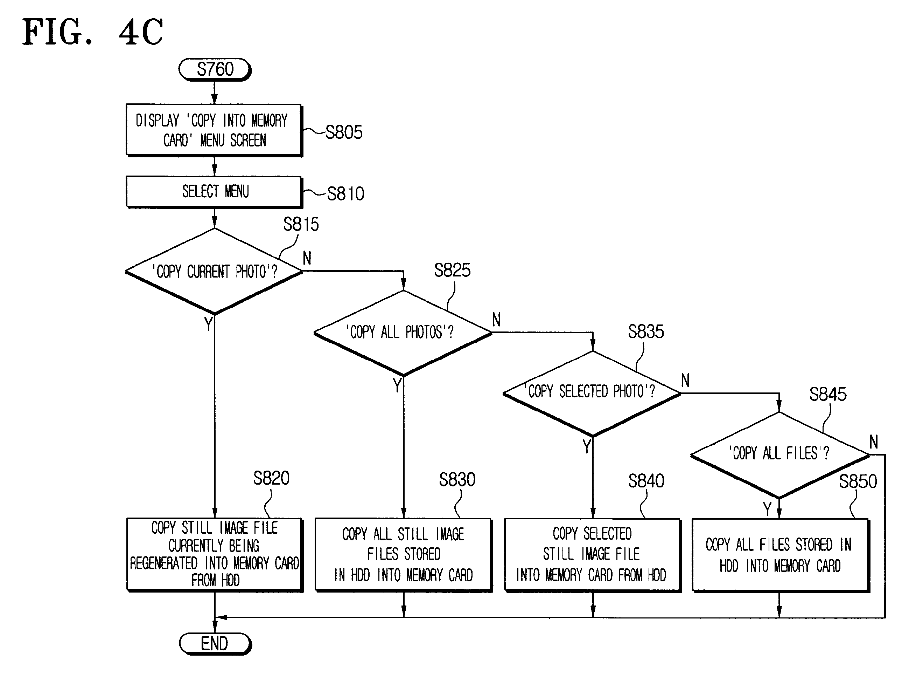

Later when the user selects the 'Copy into memory card' item in the menu screen displayed in step 750 (S760), the still image file stored in the HDD 255 is copied into the memory card 251 (S800). The copying procedure in step 800 will now be explained in more detail with reference to Figure 4C.

When the user selects the 'Copy into memory card' item in step 760, the 'Copy into memory card' menu screen is displayed on the LCD 243 (S805). The menu screen in this case is illustrated in Figure 5F.

Then the user is given an option to choose one of the menu items displayed on the menu screen (S810).

In step S815, the user chooses whether or not to copy the current photo. When the user selects 'Copy current photo' menu item for copying a still image file, currently being regenerated, into the memory card 251, the first controller 360 reads, through the TIC 253 and the CF interface 373, the still image file currently being regenerated from the HDD 255 and stores it in the memory card 251 through the memory card interface 371, thereby copying the image file between recording media (S820).

In step S825, the user can choose to copy all photos. Also, when the user selects the 'Copy all photos' menu item for copying all of the still image files, including the still image file currently being regenerated, in the HDD 255 into the memory card 251, the first controller 360 reads, through the TIC 253, the CF interface 373 and the system bus 380, every still image file stored in the HDD 255 and stores them in the memory card 251 through the memory card interface 371, thereby copying the image files between recording media (S830).

In step S835, the user can choose to copy selected photos. In addition, when the user selects the 'Copy selected photo' menu item for copying only selected files among the still image files existing in the HDD 255, where the still image file currently being regenerated is also stored, into the memory card 251, the first controller 360 reads, through the TIC 253, the CF interface 373 and the system bus 380, the still image files the user selected through the operation unit 231 and stores them in the memory card 251 through the memory card interface 371, thereby copying the image files between recording media (S840).

Lastly, in step S845, the user can choose to copy all files. When the user selects the 'Copy all files' menu item for copying all files, existing in the HDD 255 where the still image file currently being regenerated is also stored, into the memory card 251 (S845), the first controller 360 reads, through the TIC 253, the CF interface 373 and the system bus 380, every file stored in the HDD 255 and stores them in the memory card 251 through the memory card interface 371, thereby copying image files between recording media (S850).

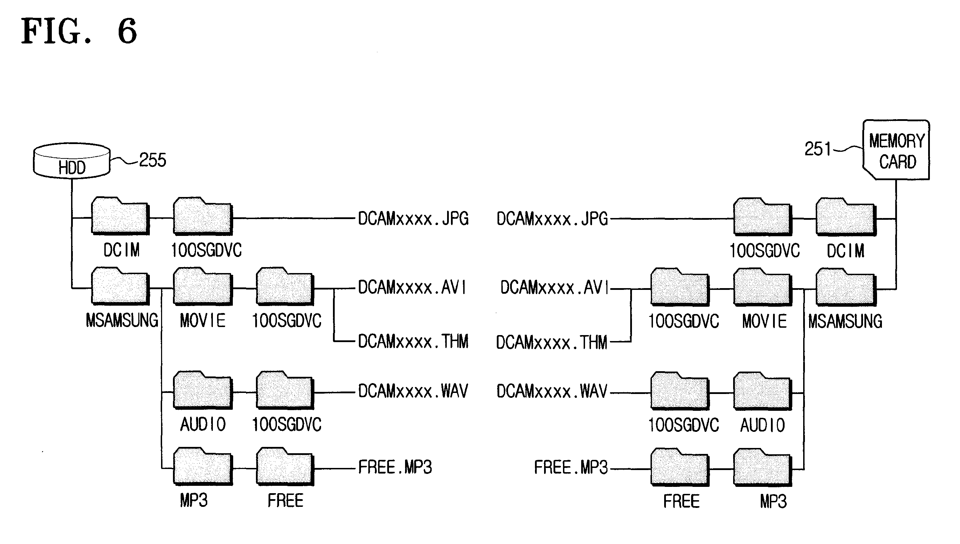

The copying of image files between recording media described in steps of 820, 830, 840, and 850 will be described in more detail with reference to Figure 6. Figure 6 illustrates the directory structure of the HDD 255 and the memory card 251.

As shown in Figure 6, the HDD 255 and the memory card 251 have the same directory structure so it will be sufficient to explain the directory (also called folder) structure of the HDD 255 only.

Conforming to Design rule for Camera File system (DCF) standard, the HDD 255 includes a directory 'DCIM' for storing still image files and a directory 'MSAMSUNG' for storing other image files.

DCIM includes a sub-directory called '100SGDVC', which has a capacity for storing up to 9999 still image files. When '100SGDVC' is full with 9999 files, a directory '101SGDVC' is automatically created. Therefore, subsequent still image files are recorded in '101SGDVC' and so on.

Still image files in '100SGDVC' are stored with file names of the form 'DCAMxxxx.JPG', where 'xxxx' is any number from 0001 to 9999, and indicates the generation order of the file and 'JPG' indicates that the still image files are in JPEG format.

'MSAMSUNG' a sub-directory 'MOVIE' for storing moving image files, a sub-directory'AUDIO'for storing audio files generated by the recordation through the microphone 271, and a sub-directory 'MP3' for storing MP3 files.

The 'MOVIE' includes a sub-direcory called '100SGDVC'. More sub-directories, with names like '101SGDVC', '102SGDVC', ..., '999SGDVC' can be created.

In '100SGDVC', the moving image files are stored with a file names of the form 'DCAMxxxx.AVI', where 'xxxx' can be, for example, any number between 0001 to 9999. When a moving image file is being created, the first controller 360 generates an additional information file composed of the name of the moving image file, file generation date, play time and the first frame or the last frame of the moving image, and stores them in '100SGDVC'. The additional information file has the same file name with the corresponding moving image file but has the extension 'THM'.

The additional information file provides the user with more information about the corresponding moving image file. That is, the first controller 360 generates a moving image file list on the basis of the name, file generation date, play time, and the first frame or the last frame of the moving image recorded in the additional information file of the moving image file, and displays the moving image file list on the LCD 243, thereby enabling the user to check the contents of the moving image files individually. This moving image file list is very convenient for the user, compared to the case when only the moving image file names are given.

A sub-directory '100SGDVC' of the 'AUDIO' directory stores audio files created by recording through the microphone 271. Audio files are stored file names of the form 'DCAMxxxx.WAV', where 'xxxx' can be, for example, any number between 0001 to 9999.

A sub-directory of 'MP3' stores MP3 files. In this case, the user freely determines the directory names and the file names of MP3 files. Therefore, the name 'Free' for the directory and the file names in Figure 6 implies that the user can freely choose the directory names and the file names.

For the following description an assumption is made that the still image file currently being regenerated has the file name 'DCAM0001.JPG' stored in the DCIM/100SGDVC directory of the HDD 255.

Referring back to Figure 4C, in step S820 where the still image file currently being regenerated is copied from the HDD 255 into the memory card 251, the file DCAM0001.JPG in DCIM/100SGDVC on the HDD 255 is now stored under the name DCAM0001.JPG in DCIM/100SGDVC in the memory card 251.

If there is a file with the same file name, i.e. DCAM0001JPG, already in DCIM/100SGDVC in the memory card 251, the first controller 360 informs the user of this through the LCD 243, to give the user an option to choose whether he wants to overwrite, cancel the copying, or change the digits of file name. This process is also applied to the steps S830, S840, and S850.

In step S830 where all of the still image files in the HDD 255 are copied into the memory card 251, every still image file stored in DCIM/100SGDVC on the HDD 255 is stored with the same file name and extension in DCIM/100SGDVC in the memory card 251.

In step S840, where only selected still image files are copied from the HDD 255 into the memory card 251, the user selects still image files from among the still image filed stored in DCIM/100SGDVC on the HDD 255 and only these selected still image files are stored with the same file names and extensions in DCIM/100SGDVC in the memory card 251.

In step S850, where all of the files stored in the HDD 255 are copied into the memory card 251, all of the files from the HDD 255 are stored with the same file names and extensions in a corresponding directory in the memory card 251. Particularly in step 850, even the additional information file (whose extension is 'THM') associated with each moving image file is stored in the memory card 251 with the same file name and extension.

More specifically, the still image files are stored in DCIM/100SGDVC in the memory card 251, the moving image files and the additional information file are stored in MSAMSUNG/MOVIE/100SGDVC in the memory card 251, the audio files are stored in MSAMSUNG/AUDIO/100SGDVC of the memory card 251, and the MP3 files are stored in the MSAMSUNG/MP3/'FREE' folder in the memory card 251.

Unlike other directories, the 'FREE' directory for storing MP3 files can be named as the user desires. Therefore, there is a very high possibility that the memory card 251 and the HDD 255 will not both have an MP3 file directory with the same name. At this time, the first controller 360 informs the user of this through the LCD 243, and allows him to decide whether to generate a new folder with the same name in the memory card 251 or to store the file in another existing folder of the memory card 251.

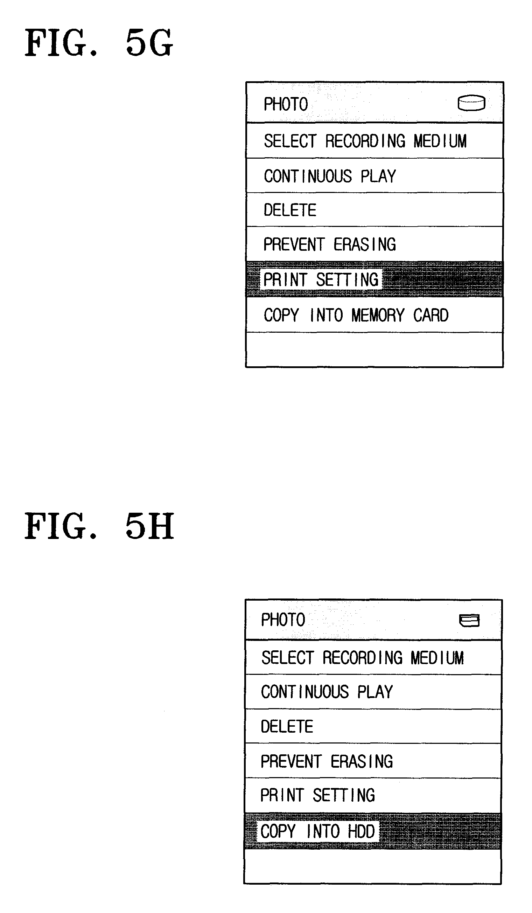

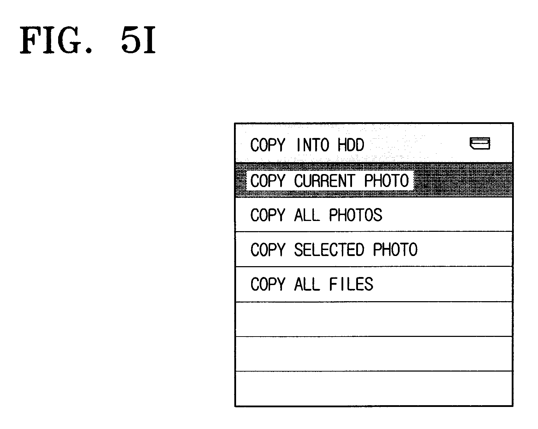

Referring back to Figure 4A, if it turns out that no memory card 251 is mounted (S740), the first controller 360 controls the GUI generation unit 350 to have an inactive 'Copy into memory card' menu item on the LCD 243 (S770). The menu screen displayed on the LCD 243 in this case is illustrated in Figure 5G. Since the 'Copy into memory card' menu item is inactive, the user cannot move the cursor to that menu item or select it.

On the other hand, if it turns out that the recording medium previously selected in step S710 is the memory card 251 (S720), the first controller 360 controls the GUI generation unit 350 to generate a menu screen including a 'Copy into HDD' menu item displayed on the LCD 243 (S780). The menu screen displayed on the LCD 243 in this case is illustrated in Figure 5H.

In the upper right corner of the menu screen in Figure 5H is a rectangular icon, indicating that the currently selected recording medium is the memory card 251. Therefore, seeing the rectangular shaped icon on the menu screen and the 'Copy into HDD' menu item, the user can easily see which recording medium is currently being used and into which recording medium image files can be copied.

Comparing step S750 (Figure 5E) with step 780 (Figure 5H), both automatically display on the menu screen the recording medium into which image files can be copied according to the currently selected recording medium. Therefore, the user is much less confused and can more conveniently determine into which recording medium his images will be stored.

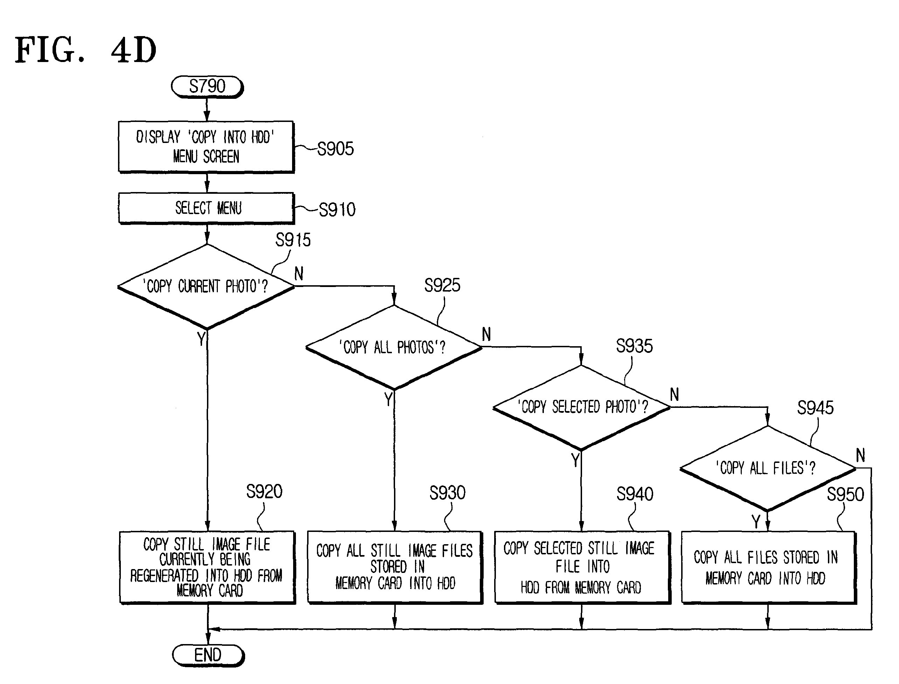

Later when the user selects, in step S790, the 'Copy into HDD' menu item on the menu screen displayed in step S780, a still image file stored in the memory card 251 is copied into the HDD 255 (S900). The copying procedure in step S900 will now be explained with reference to Figure 4D. Since much of the copying procedure in step S900 corresponds to the copying procedure in step S800, the copying procedure will not be described in detail here.

When the user selects the 'Copy into HDD' menu in step 790, the 'Copy into HDD' menu screen that is illustrated in Figure 5I is displayed on the LCD 243 (S905).

The user can select one of the menu items displayed on the menu screen (S910).

In step S915, the user can choose to copy the current photo or not. If the user selects 'Copy current photo', the first controller 360 copies the still image file currently being regenerated into the HDD 255 from the memory card 251 (S920).

On the other hand, in step S925, if the user selects the 'Copy all photos', the first controller 360 copies all of the still image files from the memory card 251 into the HDD 255 (S930).

In step S945, the user is given the choice to copy all files. If the user selects 'Copy selected photos' (S935), the first controller copies only certain still image files the user selected through the operation unit 231 into the HDD 255 from the memory card 251 (S940).

Also, if the user selects 'Copy all files' (S945), the first controller 360 copies every file stored in the memory card 251 into the HDD 255 (S950).

In the present embodiment, to reduce the load of the first controller 360 the GUI generation unit 350, the second controller 233 and the memory card recognition unit 252 are used individually. However, in the case of embodying the first controller 360 to a high-speed processor, the first controller 360 can function as the GUI generation unit 350, the second controller 233 and the memory card recognition unit 252 and thus, these devices can be eliminated.

Although the present embodiments only illustrated how to copy the still image files between recording media, this is illustrative only. Therefore, embodiments of the present invention can also be applied for copying moving image files, MP3 files, and audio files between recording media, by using the 'Copy between recording media' menu, which is a sub-menu of the 'Moving image' menu, the 'MP3' menu, and the 'Audio' menu.

As described before, when the image file stored in one recording medium is copied into another recording medium, the recording medium where the file to be copied is stored and the recording medium, which the file is copied into is automatically displayed on the menu screen for user's convenience. In addition, since an image file for copying between recording media is respectively stored in a corresponding folder, file searching and file management after copying become much easier.

The foregoing embodiment and advantages are merely exemplary and are not to be construed as limiting the present invention. The present teaching can be readily applied to other types of apparatuses. Also, the description of the embodiments of the present invention is intended to be illustrative, and not to limit the scope of the claims, and many alternatives, modifications, and variations will be apparent to those skilled in the art.

## Claims

1. A portable combination apparatus comprising:
a first recording medium (255);
connection means (143, 371) for operatively connecting to a second recording medium (251);
graphical user interface means (243, 350) including selecting means (231f); and
processing means (360),
**characterised in that** the processing means (360) is responsive to a user input, effected by means of the graphical user interface means (231f, 243, 350), to copy an image file from the first recording medium (255) to a second recording medium (251), connected to said connection means (143, 371), or *vice versa*.

2. A portable combination apparatus, comprising:
a first and a second recording medium;
a display for displaying a menu screen comprising a plurality of menus including a first menu to copy an image file stored in the first recording medium into the second recording medium;
an operation unit for enabling a user to select the first menu, on the basis of the displayed menu screen; and
a control unit for displaying the menu screen on the display, and if the user selects the first menu through the operation unit, copying the image file stored in the first recording medium into the second recording medium under same file name and file extension.

3. The apparatus according to claim 2, wherein if the second recording medium has an image file under the same file name and file extension with the image file to be copied, the control unit changes the file name of the image file and copies the same into the second recording medium.

4. The apparatus according to claim 2, wherein the name of the second recording medium which the image file is copied into is displayed on the first menu.

5. The apparatus according to claim 4, wherein the name of the first recording medium where the image file for copying is stored is displayed on the menu screen.

6. The apparatus according to claim 2, wherein the first and second recording media store the image file in a different folder according to the kind of the image file, and the control unit controls the image file copying process between the first and second recording media so that the image file is copied into a corresponding folder according to the kind of the image file.

7. The apparatus according to claim 6, wherein the control unit further copies into the second recording medium a same kind image file with the image file to be copied from the first recording medium.

8. The apparatus according to claim 6, wherein the control unit copies into the second recording medium a image file selected by the user through the operation unit among the image files stored in the first recording medium.

9. The apparatus according to claim 6, wherein the control unit copies into the second recording medium an additional information file including additional information about the image file to be copied from the first recording medium.

10. The apparatus according to claim 2, wherein the control unit comprises a graphical user interface (GUI) generation unit for generating the menu screen.

11. The apparatus according to claim 2, wherein the first recording medium is a built-in recording medium, and the second recording medium is a detachable recording medium, whereby if the second recording medium is detached the first menu on the menu screen is inactivated.

12. A method for copying an image file between a first recording medium and a second recording medium of a portable combination apparatus, the method comprising the steps of:
displaying a menu screen comprising a plurality of menus including a first menu for copying an image file stored in the first recording media into the second recording media;
allowing a user to select the first menu on the displayed menu screen; and
if the first menu is selected, copying the image file recorded in the first recording medium into the second recording medium under the same file name and file extension with the image file from the first recording medium.

13. The method according to claim 12, wherein if the second recording medium includes the image file having the same file name and file extension with the image file from the first recording medium, allowing the user to change the file name of the image file from the first recording medium and copying the image file into the second recording medium.

14. The method according to claim 12, wherein the first menu displays the name of the second recording medium the image file is copied into.

15. The method according to claim 14, wherein the menu screen displays the name of the first recording medium where the image file to be copied is stored.

16. The method according to claim 12, wherein the first and second recording media respectively include different files for storing image files according to the kind of file, and the image file is copied between corresponding folders of the recording media.

17. The method according to claim 16, wherein the same kind image file with the image file copied from the first recording medium is further copied into the second recording medium.

18. The method according to claim 16, wherein the selected image file among the image files stored in the first recording medium is copied into the second recording medium.

19. The method according to claim 16, wherein an additional information file where additional information about the image file from the first recording medium is recorded is further copied into the second recording medium.

20. The method according to claim 12, wherein the first recording medium is a built-in recording medium, and the second recording medium is a detachable recording medium, and if the second recording medium is detached, the first menu on the menu screen is inactivated.
